# EUROPÄISCHE PATENTANMELDUNG

(11) **EP 1 403 996 A2**
(43) Veröffentlichungstag der Anmeldung: **31.03.2004**
(21) Anmeldenummer: 03019910.3
(22) Anmeldetag: 02.09.2003
(51) Int. Cl.: H02H 7/093

(54) **Überlastsicherung für Elektromotoren und Verfahren zur Überlastsicherung von Elektromotoren**

(30) Priorität: 27.09.2002 DE 10245259
(71) Anmelder: Pierburg GmbH, 41460 Neuss (DE)
(72) Erfinder: Beyer, Stefan, 04654 Frohburg (DE); Teubel, Jens, 04720 Döbeln (DE)
(74) Vertreter: von Kirschbaum, Alexander, Dipl.-Ing.

(57) **Zusammenfassung**

Eine Überlastsicherung für Elektromotoren weist einen Rotorpositionssensor (10) auf, der zusammen mit einer Drehzahlbestimmungs-Einrichtung (20) einen Drehzahlsensor bildet. Die Drehzahlbestimmungs-Einrichtung (20) ist mit einem Energiebegrenzer (24) verbunden. Durch den Energiebegrenzer (24), bei dem es sich beispielsweise um einen Pulsweitenmodulations-Generator handeln kann, erfolgt insbesondere in einer Anlaufphase eine Begrenzung der Energiezufuhr bis zum Erreichen einer Referenzdrehzahl. Hierdurch ist ein thermisches Zerstören des Elektromotors verhindert.

## Beschreibung

Die Erfindung betrifft eine Überlastsicherung für Elektromotoren, insbesondere für im Kraftfahrzeug-Bereich eingesetzte Elektromotoren. Ferner betrifft die Erfindung ein Verfahren zur Überlastsicherung für Elektromotoren.

Wenn bei Elektromotoren die Welle, die beispielsweise mit einem Rotor einer in einem Kraftfahrzeug eingesetzten Wasserumwälzpumpe verbunden sein kann, blockiert, erhöht sich die Stromaufnahme in der Wicklung der Spule. Hierdurch steigt die Temperatur der Spule. Dies kann zur Zerstörung der Spule und ggf. zu Schwel- oder Kabelbränden führen. Um ein derartiges thermisches Zerstören eines Elektromotors zu verhindern, ist es bekannt, mit Temperaturfühlern die Temperatur der Spulenwicklungen zu überwachen und bei Überschreiten einer Grenztemperatur den Elektromotor abzuschalten. Das Vorsehen eines Temperaturfühlers, der thermisch mit dem Elektromotor, insbesondere der Spule des Elektromotors, gekoppelt sein muss, bedingt einen hohen Montageaufwand. Ferner ist das Vorsehen eines Temperatursensors kostenintensiv.

Eine derartige Überlastsicherung ist beispielsweise aus GB 1 363 738 bekannt. Hierin ist eine Überlastsicherung für Elektromotoren beschrieben, die sowohl einen Temperatursensor, als auch einen Drehzahlsensor aufweist. Die beiden Sensoren sind mit einer Steuereinrichtung verbunden, die die Stromzufuhr zu dem Elektromotor in Abhängigkeit der von den Sensoren erzeugten Signale steuert. Hierbei wird die elektrische Stromzufuhr während des Betriebes des Elektromotors von der Steuereinrichtung verändert, sobald die Drehgeschwindigkeit extrem niedrig und/oder die Temperatur extrem hoch ist. Es handelt sich hierbei um eine äußerst aufwändige Steuerung, die ebenfalls mit einem Temperatursensor verbunden ist, dessen Montageaufwand und Kosten hoch sind.

Aufgabe der Erfindung ist es, eine Überlastsicherung für Elektromotoren sowie ein Verfahren zur Überlastsicherung für Elektromotoren zu schaffen, durch das auf einfache Weise die Gefahr thermischer Zerstörungen verringert ist.

Die Lösung der Aufgabe erfolgt erfindungsgemäß durch die Merkmale der Ansprüche 1 bzw. 8.

Die erfindungsgemäße Überlastsicherung weist einen Drehzahlsensor zur Bestimmung der Rotordrehzahl des Elektromotors auf. Ferner ist ein Energiebegrenzer vorgesehen, der zum Begrenzen der Energiezufuhr zu einer oder mehreren Spulen des Elektromotors dient. Erfindungsgemäß ist der Energiebegrenzer derart ausgebildet, dass die Energiezufuhr zu der bzw. den Spulen von dem Energiebegrenzer bis zum Erreichen einer Referenzdrehzahl des Rotors begrenzt wird. Diese Überlastsicherung erfolgt vorzugsweise in einer Anlaufphase des Elektromotors. Somit ist sichergestellt, dass, wenn die Referenzdrehzahl nicht erreicht wird, keine erhöhte Energieaufnahme, insbesondere Stromaufnahme des Motors, erfolgt. Hierdurch ist ein extremes Erwärmen des Elektromotors und somit ein thermisches Zerstören vermieden. Ggf. kann ein Abschalten des Motors erfolgen, wenn die Referenzdrehzahl nach einer vorgegebenen Zeitspanne nicht erreicht ist.

Bevorzugt ist es, dass der mit der erfindungsgemäßen Überlastsicherung ausgestattete Elektromotor nicht sofort abgeschaltet wird, wenn die Referenzdrehzahl nicht unmittelbar nach einer kurzen Anlaufphase, d.h. einer vorgegebenen kurzen Zeitspanne, erreicht bzw. überschritten wurde. Durch das über einen längeren Zeitraum erfolgende Zuführen einer begrenzten Energie ist einerseits ein Beschädigen oder Zerstören des Elektromotors vermieden, anderseits können ggf. Blockaden überwunden werden. Ist der Elektromotor beispielsweise mit einem blockierenden Pumpenrad einer Wasserumwälzpumpe eines Kraftfahrzeuges verbunden, weil das Kühlmittel eingefroren ist, wird durch die begrenzte Energiezufuhr versucht, diese Blockade zu überwinden. Dies hat zur Folge, dass die Wasserumwälzpumpe den Förderbetrieb aufnimmt, sobald das Kühlmittel hinreichend erwärmt ist und somit ein freies Drehen des Pumpenrades möglich ist. Bei einem sofortigen Abschalten der Pumpe würde das Kühlmittel nach dem Auftauen nicht umgewälzt, so dass eine Kühlfunktion nicht gewährleistet ist.

Da die erfindungsgemäße Überlastsicherung lediglich einen einfachen Drehzahlsensor und ein Energiebegrenzer, bei dem es sich beispielsweise um einen Pulsweitenmodulations-Generator (PWM-Generator) handeln kann, aufweist, ist der Montageaufwand, insbesondere hinsichtlich des nicht erforderlichen Vorsehens eines mit der Spule des Elektromotors thermisch gekoppelten Temperaturfühlers, erheblich verringert. Hierdurch sind auch die Kosten verringert.

Ferner betrifft die Erfindung einen Elektromotor, der eine erfindungsgemäße Überlastsicherung aufweist. Ein derartiger Elektromotor kann vorzugsweise als Aggregat mit geringem Anlaufmoment verwendet werden. Der mit einer erfindungsgemäßen Überlastsicherung versehene Elektromotor weist somit einen Rotor auf, der mittelbar oder unmittelbar mit einem Drehzahlsensor verbunden ist. Hierbei kann es sich bei dem Drehzahlsensor auch um die Kombination eines Rotorpositionssensors in Verbindung mit einer Drehzahlbestimmungs-Einrichtung handeln. Ferner weist der Elektromotor, bei dem es sich vorzugsweise um einen Gleichstrommotor handelt, eine oder mehrere Wicklungen auf, die mit dem Energiebegrenzer verbunden sind. Insbesondere im KFZ-Bereich können derartige Elektromotoren mit Strömungspumpen oder Gebläsen verbunden werden.

Des weiteren betrifft die Erfindung ein Verfahren zur Überlastsicherung von Elektromotoren. Hierbei wird eine Drehzahl eines Rotors bestimmt und in einer Anlaufphase die Energiezufuhr zu einer oder mehreren Wicklungen des Elektromotors bis zum Erreichen einer Referenzdrehzahl begrenzt. Ggf. kann ein Abschalten des Motors, wie vorstehend beschrieben, nach einer gewissen Zeitspanne erfolgen. Das erfindungsgemäße Verfahren zur Überlastsicherung ist, wie vorstehend anhand der Überlastsicherung beschrieben, vorteilhaft weiterbildbar.

Nachfolgend wird die Erfindung anhand einer bevorzugten Ausführungsform unter Bezugnahme auf die anliegende Zeichnung näher erläutert.

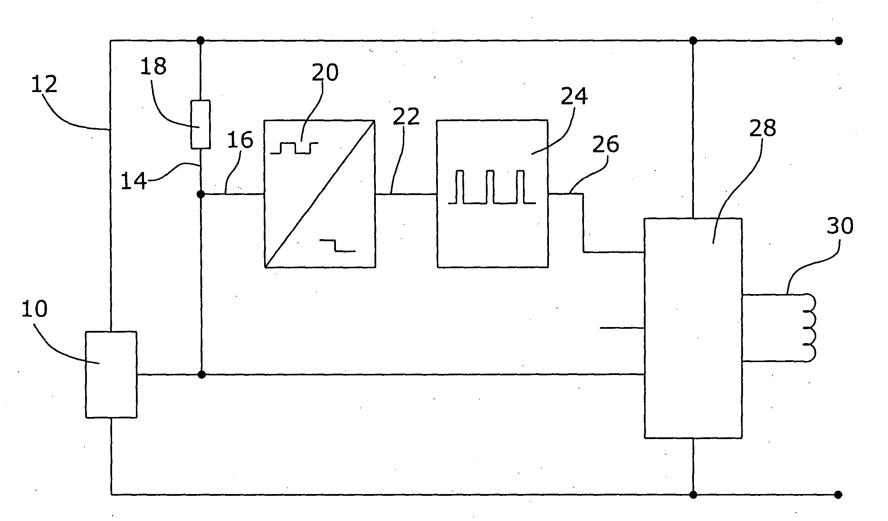

Die Figur zeigt ein schematisches Schaltbild der Überlastsicherung.

Die Überlastsicherung weist einen Rotorpositionssensor 10 auf, der mittelbar oder unmittelbar mit der Motorwelle verbunden ist bzw. die Position des Rotors bestimmt. Mit dem Rotorpositionssensor 10 ist über Leitungen 12,14,16 und einen Widerstand 18 eine Drehzahlbestimmungs-Einrichtung 20 verbunden. Die Drehzahlbestimmungs-Einrichtung 20 fungiert zusammen mit dem Rotorpositionssensor 10 als Drehzahlsensor. Bei der Rotorpositionserkennung 10 kann es sich auch um eine sensorlose Rotorpositionserkennung handeln.

Die Drehzahlbestimmungs-Einrichtung 20 ist über eine Leitung 22 mit einem Energiebegrenzer 24 verbunden, wobei es sich im dargestellten Ausführungsbeispiel bei dem Energiebegrenzer 24 um einen PWM-Generator handelt.

Der Energiebegrenzer 24 ist über eine Leitung 26 mit einer Endstufe 28 verbunden. Die Endstufe 28 ist sodann mit der Spule 30 des Elektromotors verbunden. Ggf. weist der Motor mehrere Spulen auf.

Durch die erfindungsgemäße Überlastsicherung wird erreicht, dass die Wicklung 30 eines Elektromotors erst dann mit dem vollen Betriebsstrom beaufschlagt wird, wenn von dem Drehzahlsensor 10,20 eine hinreichend große Drehzahl des Rotors des Elektromotors festgestellt wurde. Vorher wird der Strom, beispielsweise über einen PWM-Generator 24, auf einen Wert begrenzt, der ein thermisches Überlasten der Wicklung 30 verhindert und dennoch das Anlaufen des Elektromotors ermöglicht. Nach Erreichen oder Überschreiten der Referenzdrehzahl wird das PWM-Signal abgeschaltet und die Wicklung 30 wird von der Endstufe 28 ohne Begrenzung bestromt. Sollte die Referenzdrehzahl während des Betriebs wieder unterschritten werden, wird die Pulsweitenmodulation wieder zugeschaltet.

Die erfindungsgemäße Überlastsicherung sowie das erfindungsgemäße Verfahren zur Überlastsicherung ist insbesondere für Elektromotoren geeignet, die ein geringes Anlaufmoment aufweisen. Dies ist insbesondere bei im KFZ-Bereich eingesetzten Elektromotoren für Pumpen und Gebläse der Fall.

Ferner ist es möglich, den Drehzahlsensor 10,20, insbesondere die Drehzahlbestimmungs-Einrichtung 20, in einem Mikroprozessor durch Software auszubilden. Ebenso kann der Energiebegrenzer 24 als Software in einem Mikroprozessor ausgebildet werden. Dies hat den Vorteil, dass die Überlastsicherung bzw. Teile der Überlastsicherung in einem für andere Anwendungen bereits vorhandenen Mikroprozessor integriert werden können. Hierdurch können die Kosten weiter gesenkt werden.

Ein weiterer nutzbarer Nebeneffekt der erfindungsgemäßen Überlastsicherung ist die einfache Begrenzung des Anlaufstroms.

## Patentansprüche

1. Überlastsicherung für Elektromotoren, mit
einem Drehzahlsensor (10,20) zum Bestimmen der Rotordrehzahl des Elektromotors und
einem Energiebegrenzer (24) zum Begrenzen der Energiezufuhr zu einer Wicklung (30) des Elektromotors,
wobei der Energiebegrenzer (24) derart augebildet ist, dass die Energiezufuhr von dem Energiebegrenzer (24) insbesondere in einer Anlaufphase bis zum Erreichen einer Referenzdrehzahl begrenzt wird.

2. Überlastsicherung nach Anspruch 1, **dadurch gekennzeichnet, dass** der Energiebegrenzer (24) einen Pulsweitenmodulations-Generator aufweist.

3. Überlastsicherung nach Anspruch 1 oder 2, **dadurch gekennzeichnet, dass** der Dehzahlsensor einen Rotorpositionssensor (10) aufweist, der mit einer Drehzahlbestimmungs-Einrichtung (20) verbunden ist.

4. Überlastsicherung nach einem der Ansprüche 1-3, **dadurch gekennzeichnet, dass** den Energiebegrenzern (24) eine Endstufe (28) nachgeschalt ist, die mit der Wicklung (30) des Elektromotors verbunden ist.

5. Überlastsicherung nach einem der Ansprüche 1-4, **dadurch gekennzeichnet, dass** der Drehzahlsensor (10,20), insbesondere die Drehzahlbestimmungs-Einrichtung (20) und/oder der Energiebegrenzer (24) als Software in einem Mikroprozessor ausgebildet sind.

6. Elektromotor mit einer Überlastsicherung nach einem der Ansprüche 1-4.

7. Verwenden des Elektromotors nach Anspruch 6 für Aggregate mit geringem Anlaufmoment, insbesondere für Strömungspumpen oder Gebläse.

8. Verfahren zur Überlastsicherung von Elektromotoren, bei welchem eine Drehzahl eines Rotors bestimmt wird und in einer Anlaufphase die Energiezufuhr zu einer Wicklung (30) bis um Erreichen einer Referenzdrehzahl begrenzt wird.

9. Verfahren nach Anspruch 8, bei welchem die Begrenzung der Energiezufuhr durch Pulsweitenmodulation erfolgt.
